(19) Europäisches Patentamt
European Patent Office
Office européen des brevets

(11) Publication number: **0 324 040 B1**

(12) **EUROPEAN PATENT SPECIFICATION**

(45) Date of publication of patent specification: **08.07.92**

(51) Int. Cl.[5]: **C08J 7/04**, C08F 2/50, C08J 3/24

(21) Application number: **88100430.3**

(22) Date of filing: **14.01.88**

# (54) Process for controlling monomeric emissions.

(43) Date of publication of application:
**19.07.89 Bulletin 89/29**

(45) Publication of the grant of the patent:
**08.07.92 Bulletin 92/28**

(84) Designated Contracting States:
**DE ES FR GB IT NL SE**

(56) References cited:
**EP-A- 0 002 871**
**DE-A- 1 195 048**
**US-A- 4 265 723**

(73) Proprietor: **BASF Aktiengesellschaft**
**Carl-Bosch-Strasse 38**
**W-6700 Ludwigshafen(DE)**

(72) Inventor: **Livesay, Mark**
**1140 Pioneer Way**
**El Cajon, CA 92020(US)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Rank Xerox (UK) Business Services

## Description

The present invention relates to a method for controlling the emission of styrene vapors into the atmosphere from an article forming process involving ethylenic monomeric compounds, and preferably utilizing the vapors to form a protective coating over the article. More particularly, the present invention relates to a method for preventing the emission of styrene which is emitted during the curing of unsaturated polyester articles. The process preferably depends on the photopolymerizing of a surface layer so as to form a protective barrier film over the bulk of the uncured article and then curing the entire article.

The photopolymerization of olefinically unsaturated compounds by means of ultraviolet radiation (UV) is well known. U.S. Patent No. 4,265,123 of Hesse, et al. discloses the photocuring of polyester resins containing UV sensitizers which are acylphosphine oxide compounds. Hesse et al., also provides a finishing coat of an unsaturated resin to be applied to the inner surface of a mold in which a curable composition is molded and cured to a finished article having a smooth surface. Before the curable composition is filled into the mold, the finishing coat is partially cured with UV and then finally cured together with the article.

U.S. Patent No. 4,116,788 of Schmidt et al. discloses the polymerization of acrylic ester substances by means of benzoin ether and similar UV initiators in the presence of organic phosphate compounds.

U.S. Patent No. 4,017,652 of G.W. Guber discloses ultraviolet light curable coating compositions containing resins having acrylic unsaturation and capable of being free radically addition polymerized by interaction with a photocatalyst system upon exposure to ultraviolet light. The coating compositions are intended to provide a hard abrasion resistant film on a substrate such as wood polyesters, cured acrylics and the like. The patent discloses photosensitizers which may be used in the present invention,

U.S. Patent No. 2,267,992 of C.R. Beardson discloses thermosetting resin composition which emit olefinic monomeric vapors wherein the process and compositions of the present inventions can be utilized.

EP-A-0 002 871 relates to a process for the manufacture of objects from an unsaturated polyester composition, containing an unsatured polyester, a monomer and both a photoinitator and a radical initiator. The polyester is first exposed to ultraviolet light to reduce the emission of the monomer and then it is cured by the radical initiator.

The present relates to a process for use on articles which are to be cured and emit styrene upon curing. More particularly, the present invention relates to the process of coating and impregnating an uncured article which emits styrene with a composition containing a polymerizable olefinic compound and a catalyst, light curing the coating so as to form a protective barrier film having a thickness of from 0,0025 to 2,5 mm over the article, and then curing the entire article, while controlling the emission of styrene vapors into the atmosphere.

In one preferred embodiment of the invention, a coating composition is utilized which contains a polymerizable ethylenic monomer and a sensitizer for the photopolymerization of the monomer. The coating is then at least partially cured by irradiation after coating an article which itself is intended to undergo thermal polymerization. The at least partially cured coating provides a barrier against the emission of styrene vapors from the article into the atmosphere. The at least partially cured coating further provides a reaction site whereby the styrene vapors which are emitted from the article copolymerize with the monomer of the top coating so as to from a strong polymer bond between the top coat and the article.

In another preferred embodiment of the invention, a top coating is provided which undergoes photopolymerization at a faster rate than the uncured article so that the entire bulk can be polymerized together with an outer barrier film being first formed prior to any substantial curing of the base article. It has been found that the top coating during photopolymerization helps to initiate the polymerization of the base article because of the exothermic reaction during the photoreaction so that less catalyst is required for the next polymerization step.

It is therefore an object of the present invention to provide a process for coating uncured articles which upon curing emit styrene vapors so as to form a protective barrier film that controls the emission of the styrene vapors into the atmosphere.

It is a further object of the invention to provide a strong adhesive top coating onto articles formed from polymeric olefinically unsaturated compounds.

It is still another object of the invention to reduce styrene evaporation and form a protective non-tacky surface on unsaturated molding compositions which undergo thermal polymerization processes.

The coating composition of the invention preferably comprises a mixture of one or more photopolymerizable unsaturated copolymerizable polyesters and ethylenically unsaturated copolymerizable monomeric compounds, and a photoinitiator. Thermally decomposing initiators may also be added for curing in areas where the light does not sufficiently reach. The initiators are decomposed by heat generated by photopolymerization.

Any of the conventional photoinitiators can be utilized. However, since the coating composition is preferably photopolymerized at a faster rate than the substrate on which it is applied, it has been found to be advantageous to utilize a sensitizer selected from the groups consisting of acylphosphine oxides, aliphatic or aromatic phosphites and a aromatic phosphates and an aromatic ketone or aromatic aldehyde which has a triplet energy in the range of from 226,09 - 301,45 kJ 54 - 12 kilocalories per mole which promotes polymerization through bimolecular photoreactions of the energy donor tpye.

The acylphosphine oxides are disclosed in the aforementioned US Patent No. 4,265,723 and consist of compounds of the formula

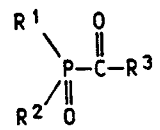

where $R^1$ is straight-chain or branched alkyl of 1 to 6 carbon atoms cyclohexyl, cyclopentvl, aryl which is unsubstituted or substituted by halogen, alkyl or alkoxy, or a S-containing or N-containing five-membered or six-membered heterocyclic radical, $R^2$ has one of the meanings of $R^1$ (but $R^1$ and $R^2$ may be identical or different) or is alkoxy of 1 to 6 carbon atoms, aryloxy or araloxy, or $R^1$ and $R^2$ together form a ring, and $R^3$ is straight-chain or branched alkyl of 2 to 18 carbon atoms, a cycloaliphatic radical of 2 to 10 carbon atoms, phenyl, naphthyl or a S•, O•, or N• containing five-membered or six-membered heterocyclic radical and may contain additional substituents, or is the group where $R^1$ and $R^2$ have the above meanings and X is phenylene or a aliphatic or cycloaliphatic divalent radical of 2 to 6 carbon atoms, and one or more of the radical $R^1$ to $R^3$ may be olefinically unsaturated.

The aliphatic and aromatic phosphates which may be utilized are disclosed in the aforementioned Patent No. 4,116,708. Examples for the phosphites to be used as activators according to the invention are listed as follows: Dimethylphosphite, dioctyl-phosphite, diphenyl-phosphite, tri-i-octylphosphite, tri-stearly-phosphite, trimethylphosphite, tri-ethyl-phosphite, tri-i-propyl-phosphate, tris-allyl-phosphite, didecyl-phenyl-phosphite,tri-phenyl-phosphite, tris-4-nonphenyl-phosphite, and tris-4-chlorophenyl-phosphite.

The photosensitizers which a triplet energy in the range of from 226,09 - 301,45 kJ 54 to 72 kilocalories per mole which may be utilized are disclosed in Patent No. 4,017,652 and include benzil, 3,L-benzofluorene, 4-napthaldehyde, 1-acetylnapthalene, 2,3-butanedione, 1-benzoylnaphthalene, 9-acetylphenanthrene, 3-acetylphenanthrene, 2-napthaldehyde, 2-benzoylnapthalene, 4-phenylbenzoylphenone, 4-phenylacetophenone, anthraquinone, thioxanthone, 3,4-methylenedioxyacetophenone 4-cyanobenzophenone, 4-benzoylpyrine, 2-benzoylpyrine, 4.4'-dichlorobenzophenone, 4-trifluoramethylbenzophenane, 3-chlorobenzophenone, 4-methoxbenzophenone, 3,4-dimethylbenzophenone, 4-methylbenzophenone, benzophenone, 2-methylbenzophenone, 4,4' -dimethylphenone, 2,5-dimethylbenzophenone, 2,4-dimethylbenzophenone. Many of the photoinitiators which may be used in the present invention fall within the formula

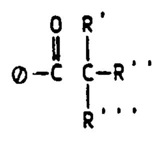

where ∅ is phenyl and R' , R'' and R''' are each independently hydrogen, halo, alkyl, alkoxy or phenyl, with the proviso that R' , R'' and R''' are not concurrently all hydrogen, all alkyl, or all phenyl. The various alkyl, alkoxy and phenyl groups comprising the molecule may be substituted to a minor extent with substituents which will not interfere with the utility of the compound as a photoinitiator. It is preferred that the alkyl, alkoxy and phenyl groups be unsubstituted. Examples of permissible substituents for the phenyl groups are halo, lower alkyl, lower alkoxy, carboxy and carbanoxy.

When R', R'', or R''' is alkyl, it usually contains from 1 to 10 carbon 35 atoms. From 1 to 6 carbon atoms is typical. From 1 to 4 carbon atoms is preferred.

When R′, R″ or R‴ is alkoxy, it usually contains from 1 to 6 carbon atoms. From 1 to 4 carbon atoms is typical. The preferred alkoxy groups are methoxy and isobutoxy.

When R′, R″, and R‴ are halo, it usually is fluoro, chloro or bromo. Chloro and brome are most often

used. Chloro is preferred. Examples of photoinitiators which may be used in the present invention are: Ethyl benzoin ether, isopropyl benzoin ether, butyl benzoin ether, isobutyl benzoin ether, α,α-diethoxyacetophenone, α • α-dimethoxy-a-phenylacetophenone, α,α-diethoxy-α-phenylacetophenone, 4,4′-dicarboethoxybenzoin ethyl ehter, benzoin phenyl ether, α-methylbenzoin ethyl ether, α-methylolbenzoin methyl ether, α,α,α-trichloroacetophenone. The preferred photoinitiators are isobutyl benzoin ether benzil dimethyl ketal and α,α-diethoxyacetophenone. Mixtures of photoinitiators may be used, if desired.

Suitable copolymerizable, ethylenically unsaturated, monomeric compounds are preferably, vinyl and acrylic compounds conventionally used for the preparation of unsaturated polyester moldings, impregnating and coating compositions, for example styrene, substituted styrenes, eg. p-chlorostyrene or vinyltoluene, esters of acrylic acid and methacrylic acid and methacrylic acid with alcohols of 1 to 18 carbon atoms, eg. methyl methylacrylate, butylacrylate, ethylhexyl acrylate, hydroxpropyl acrylate, dihydrodicyclopentadienyl acrylate and butanediol diacrylate, acrylamides and methacrylamides, allyl esters, eg. diallyl phthalate, and vinyl esters, eg. vinyl ethylhexanoate and vinyl pivalate. Mixtures of the said olefinically unsaturated monomers are also suitable. Preferred components are styrene, α-methylstyrene, chlorostyrene, vinyltoluene, divinylbenzene and diallyl phthalate. Unsaturated polyesters for the purposes of the invention are not only the conventional unsaturated polycondensation products of, preferably, dicarboxylic acids and glycols, but also unsaturated polyesters containing urethane groups, and unsaturated vinyl ester resins.

Preferred unsaturated polyesters are the conventional polycondensation products of polybasic, especially di-basic, carboxylic, acids and their esterifiable derivatives, especially their anhydrides, linked by ester bonds to polyhydric, especially dihydric, alcohols, which products may in addition contain radicals of monobasic carboxylic acids and/or radicals or monohydric alcohols and/or radicals of hydroxycarboxylic acids, and in which products at least some of the radicals must possess ethylenically unsaturated copolymerizable groups.

Suitable polyhydric, especially dihydric, saturated or unsaturated alcohols are the conventional alkanediols and oxa-alkanediols and oxa-alkanediols which in particular contain acylic groups, cyclic groups, or both types of groups, for example, ethylene glycol, 1,2-propylene glycol, propane-1,3-diol, 1,3-butylene glycol, butene-1,4-diol, hexane-1,6-diol, 2,2-dimethylpropane-1,3-diol, diethylene glycol. Triethylene glycol, polyethylene glycol, cyclohexane-1,2-diol, 2,2-bis-(p-hydroxycyclohexyl)-propane, trimethylolpropane monoallyl ether and butene-1,4-diol. Minor amounts of monohydric, trihydric, or higher polyhydric alcohols, eg. ethylhexanol, fatty alcohols, benzyl alcohols, 1,2-di-(allyloxy)-propan-3-ol, glycerol, pentaerythritol or trimethylolpropane may also be used.

Suitable carboxylic acids and their derivatives are dibasic olefinically unsaturated, preferably α,-[-olefinically unsaturated, carboxylic acids, eg.maleic acid, fumaric acid and mesaconic acid, and their esters or preferably their anhydrides. The polyesters may additionally contain, as condensed units, other dibasic dicarboxylic acids which act as modifiers and may be unsaturated and/or saturated or aromatic, for example, succinic acid, glutaric acid, d-methylglutaric acid, adipic acid, sebacic acid, pimelic acid, pthalic anhydride, o-pthalic acid, isopthalic acid, terephthalic acid, dihydrophthalic acid, tetrahydrophthalic acid, tetrachlorophthalic acid, 3,6-endomethylenephthalic acid, tetrachlorophthalic acid, 3,6-endomethylene,1,2,3,6-tetrahydrophthalic acid, endamethylenetetrachlorophthalic acid or hexachloroendamethylenetetrahydrophthalic acid, as well as monobasic, tribasic or higher polybasic carboxylic acids, for example ethylhexanoic acid, fatty acids, methacrylic acid, propionic acid, benzoic acid, 1,2,4,-benzenetricarboxylic acid or 1,2,4,5-benzenetetracarboxylic acid. The use of maleic acid, maleic anhydride and fumaric acid is preferred.

Mixtures of unsaturated polyesters, including those which are of only limited solubility in the vinyl monomers and crystallize readily can also be used with advantage. Such readily crystallizing unsaturated polyesters can be synthesized, for example, from fumaric acid, adipic acid, terephthalic acid, ethylene glycol, butane-1.4-diol, hexane-1,6-diol and neopentyglycol.

Unsaturated polyesters with preferably terminal double bonds are also suitable.

The unsaturated polyesters have acid numbers of from 10 to 200, preferably from 20 to 85, and mean molecular weights of from 800 to 6,000, preferably from 1,000 to 4,000.

Suitable unsaturated vinyl ester resins for the purposes of the invention contain the characteristic group $-CO-OCH_2CHOH-CH_2O-$ and also contain terminal polymerizable unsaturated groups. The vinyl ester resins are prepared by reacting about equivalent amounts of a polyepoxide resin and of an unsaturated monocarboxylic acid, for example reacting 1 equivalent of methacrylic acid with 1 equivalent of a polyepoxide resin.

The coating compositions of the invention are usually prepared by simply admixing the various ingredients. The compounds comprising the photoinitiator system may be premixed and then admixed with the other ingredients of the coating composition or they may be added separately. Although mixing is

usually accomplished at room temperature, elevated temperatures are sometimes used.

The light curable coating compositions of the invention are generally used to form cured adhesive coatings simultaneously while curing the articles. The article is coated with the coating composition using substantially any technique known to the art. These include spraying, curtain coating, dipping, roller application, printing, brushing, drawing, and extrusion. The coated article is then exposed to light to cure the coating and preferably at least a portion of the styrene emitted therefrom into a hard, mar and abrasion resistant film.

The amount of photoinitiator present in the light curable coating compositions of the invention may be widely varied. Usually the photoinitiator is present in an amount in the range of from 0.01 percent to 5 percent based on the weight of the binder of the coating composition. More often an amount in the range of from 0.05 percent to 2 percent is employed.

The amount of polymerizable monomer having ethylenic bonds available in the coating composition is subject to a wide variation. The monomer is usually available in an amount in the range of from 20 to 100 percent by weight of the binder of the coating composition. An amount in the range of from 50 to 80 percent is typical.

Extender pigments which should be transparent to light are optional ingredients which are often included in the coating composition. Examples of suitable extender pigments are finely divided particles of silica, calcium carbonate, talc, magnesium silicate and aluminum silicate. Extender pigment is generally present in any amount in the range of from 0 to 50 percent by weight of the coating composition. When extender pigment is used, it is usually present in the range of from about 1 to about 35 percent by weight of the coating composition. Although a single extender pigment is ordinarily used, mixtures of several extender pigments are satisfactory.

Ultraviolet light absorbing pigments may optionally be used in small amounts which do not preclude curing of the interior of the coating. The maximum amount is therefore related to the thickness of the coating to be cured. Thin coatings may tolerate more ultraviolet high absorbing than pigment than thick coatings. Examples of suitable ultraviolet light absorbing pigments are titanium dioxide, antimony oxide, zinc oxide, zirconium oxide, zinc sulfide, and lithopone. Mixtures of pigments may be used.

Another optional ingredient which is often included in the coating composition is an inert volatile organic solvent. Mixtures of several inert volatile organic solvents may be used when desired. Like the extender pigment, the inert volatile organic solvent does not ordinarily provide significant additional hiding, but it accelerates the rate at which opacity is obtained. Examples of suitable inert volatile organic solvents are methyl alcohol, propyl alcohol, isopropyl alcohol, butyl alcohol, tert-butyl alcohol, amyl alcohol, hexyl alcohol, 2-ethylhexyl alcohol, cellosolve, ethyl cellosolve, cellosolve acetate, 2-ethylhexyl acetate, tetrahydrofuran, and aliphatic naphtha. Solvent of this type is ordinarily present in the coating composition in the range of from 0 to 40 percent by weight of the vehicle of the coating composition. From 0 to 15 percent is typical.

Also, the compositions should contain customarily utilized inhibitors to prevent premature, unwanted polymerization of the hardenable substances in order to obtain ready preparations which are stable for storage purposes. Hydroquinone, ionol, methoxyphenol and other conventional inhibitors are suitable in this instance.

Cured coatings of the light curable coating composition of the invention have thicknesses in the range of from 0,0025 to 2,5 mm (0.1 to 100 mils). More often, they have thicknesses in the range of 0,033 to 0,25 mm (1.3 to 10 mils).

Any suitable source that emits light, preferably ultraviolet radiation having a wavelength in the range of from 180 to 400 nm (1800 to 4000 Angstrom units), may be used in the practice of this invention. Suitable sources are mercury arcs, carbon arcs, low pressure mercury lamps, medium pressure mercury lamps, high pressure mercury lamps, swirlingflow plasma arc, ultraviolet light emitting diodes and ultraviolet light emitting lasers. Particularly preferred are ultraviolet light emitting lamps of the medium or high pressure mercury vapor type. Such lamps usually have fused quartz envelopes to withstand the heat and transmit the ultraviolet radiation and are ordinarily inthe form of long tubes having an electrode at either end. Examples of these lamps are PPG Models 60-2032, 60-0197, 60-0393 and 60-2081 and Hanovia Models® 6512A431, 6542A431 and 6477A431. Also daylight, preferably sunlight can be used as an energy source.

The time of exposure to light and the intensity of the light to which the coating composition is exposed may vary greatly. Generally the exposure to light should continue until the hard, mar and abrasion resistant films results.

Uncured articles which may be coated with the compositions of the invention may vary widely in their properties. The articles contain the various uncured molding compositions which emit styrene vapors upon curing. The molding compositions may comprise the same or different monomeric or ethylenic compounds

utilized in the coating composition of the invention. Preferably, the uncured molding compositions are unsaturated polyester or vinyl ester resins as described above, containing styrene and eventually further monomers, and a radical peroxide catalyst.

The invention is additionally illustrated in connection with the following Examples.

Example 1

A. Preparation of top coat composition.

Following the procedure described in Patent No. 3,933,682 coating composition was prepared as follows:

| Ingredient | Amount ( % by wt.) |
|---|---|
| Pentaerythritoltetraacrylate | 94 |
| Benzil | 2 |
| Triphenylphosphine | 2 |
| Pentachlorobenzene | 2 |

B. Preparation of glass fiber-reinforced molding composition.

Glass fiber mat laminates (containing 25% of glass fibers) of 5 and 10 mm thickness were prepared from Derakane® 411-45 (Dow Chemical Co., Midland, Mich. USA), a vinyl ester resin, which was formulated with 0,15% benzoyl peroxide.

C. Preparation of coated article.

The coating composition of step A was applied to the laminates of step B immediately after its formulation and irradiated with UV light (TUV 40W/05 fluorescent lamps, Philips) at a distance of 15 cm. Within 30 seconds the top coating formed a thin skin around the laminates. After the composition and coating were subjected to 30 seconds of irradiation with UV light they were placed in an oven and cured at 140 °C for about 3 hours. The top coating formed a barrier which prevented emission of styrene vapors during thermal polymerization of the laminte. The UV curing of the top coat created an exothermic reduction which initiated curing of the composition before placing it in the oven.

The experiment showed clearly that it was possible to form a barrier layer over the laminate by more rapidly curing the top coating and to contain the barrier any emissions from the laminate during the main polymerization reaction.

Example 2

The procedure of Example 1 was followed except that the tricatalyst benzil, triphenylphosphine and pentachlorobenzene were replaced with an equal amount of 2,6-dimethoxybenzoyl-diphenylphosphine oxide prepared according to the process of U.S. Patent No. 4,265,723. In this experiment the top coating cured more rapidly.

Examples 3 - 11

Similarly following the procedure of Example 1, coating compositions were prepared except that in lieu of pentaerythritol tetra acrylate, there was utilized the following unsaturated polyester resins:

| Example | Resin |
|---|---|
| 3 | The Resin is a 65% strength solution, stabilized with 0.01% of hydroquinone, of an unsaturated polyester, obtained from maleic acid, o-phthalic acid, ethylene glycol and 1,2-propylene glycol in the molar ratio of 1:2:2.4:0.70 in styrene. The unsaturated polyester has an acid number of 50. |
| 4 | The Resin is a 67% strength solution, stabilized with 0.01% of hydroquinone, of an unsaturated polyester, obtained from maleic acid, tetrahydrophthalic acid and diethylene glycol in the molar ratio of 1:0.5:1.5 in styrene. The unsaturated polyester has an acid number of 43. |
| 5 | The Resin is a 66% strength solution, stabilized with 0.01% of hydroquinone, of an unsaturated polyester, obtained from maleic acid, o-phthalic acid and 1,2-propylene glycol in the molar ratio of 1:0.5:1.5 in styrene. The unsaturated polyester has an acid number of 50. |
| 6 | The Resin is a 65% strength solution, stabilized with 0.01% of hydroquinone, of an unsaturated polyester, obtained from maleic acid, isophthalic acid 1,2-propylene glycol and diethylene glycol in the molar ratio of 1:0.67:0.72:1 in styrene. The unsaturated polyester has an acid number of 26. |
| 7 | The Resin is a 65% strength solution, stabilized with 0.01% of hydroquinone, of an unsaturated polyester, obtained from fumaric acid, adipic acid, neopentylglycol and 1,2-propylene glycol in the molar ratio of 1:1:1.7:0.35 in styrene. The unsaturated polyester has an acid number of 17. |
| 8 | The Resin is a mixture of 55% of resin of Example 8 and 45% of a strength solution, stabilized with 0.01% of hydroquinone, of an unsaturated polyester, obtained from maleic acid, adipic acid, 1,2-propylene glycol and diethylene glycol in the molar ratio of 1:0.5:55.1, in styrene which polyester has an acid number of 30. |
| 9 | The Resin is a 65% strength solution, stabilized with 0.012% of hydroquinone, of an unsaturated polyester, obtained from maleic acid, o-phthalic acid, 1,2-propylene glycol and diethylene glycol in the molar ratio of 1:0.25:1:0.25 in styrene which polyester has an acid number of 43. |
| 10 | The Resin is a 65% strength solution, stabilized with 0.01% of hydroquinone, of an unsaturated polyester, obtained from maleic acid, o-phthalic acid and 1,2-propylene glycol in the molar ratio of 1:1:2 in styrene. The unsaturated polyester has an acid number of 52. |
| 11 | The Resin is a 65% strength solution, stabilized with 0.01% of hydroquinone, of an unsaturated polyester, obtained from maleic acid, o-phthalic acid and 1,2-propylene glycol in the molar ratio of 1:2:3 in styrene. The unsaturated polyester has an acid number of 30. |

The coating compositions of each of Examples 3 - 11 formed effective barrier films.

**Claims**

1. A process for forming a coating on an uncured article containing a radical peroxide catalyst which emits styrene vapor on curing, and controlling the emission of said vapor into the atmosphere which comprises the steps of impregnating said uncured article with a top coating composition comprising at least one polymerizable olefinic compound and a photoinitiator, light curing said coating composition so as to form a barrier film having a thickness of from 0.0025 to 2.5 (0,1 to 100 mils) mm on said uncured article and then curing said uncured article.

2. The process of claim 1 wherein said top coating and said uncured article are simultaneously cured, said top coating being curable at a faster rate than said uncured article.

3. The process of claim 1 wherein said top coating composition is photocurable and said uncured article is heat curable.

4. The process of claim 1 wherein said top coating composition comprises a mixture of an ethylenically unsaturated polyester or vinyl ester resin, one or more ethylenically unsaturated copolymerizable monomeric compound, and 0.01 to 5% by weight of a photoinitiator.

5. The process of claim 1 wherein said photoinitiator is selected from the group consisting of acylphosphine oxides, aliphatic or aromatic phosphites and an aromatic ketone or aldehyde which has a triplet energy in the range of from 226,09 - 301,45 kJ (54 - 72 kilocalories) per mole which promotes polymerization through bimolecular photoreactions of the energy donor type.

6. The process of claim 1 wherein at least part of said styrene vapor is copolymerized with said olefinic compound of said coating composition.

7. The process of claim 1 wherein said top coating composition causes an exothermic reaction which initiates heat curing of said uncured article.

**Revendications**

1. Procédé de formation d'un revêtement sur un article non durci contenant un catalyseur radicalaire du type peroxyde, qui dégage des vapeurs de styrène au durcissement, et de contrôle du dégagement desdites vapeurs dans l'atmosphère, comprenant les étapes consistant à imprégner ledit article non durci d'une composition de revêtement supérieur comprenant au moins un composé oléfinique polymérisable et un photoinitiateur, à durcir sous l'action de la lumière ladite composition de revêtement de manière à former un film-barrière ayant une épaisseur de 0,0025 à 2,5 mm (0,1 à 100 millièmes de pouce) sur ledit article non durci, puis à durcir ledit article non durci.

2. Procédé selon la revendication 1, dans lequel ladite composition de revêtement supérieur et ledit article non durci sont durcis simultanément, ladite composition de revêtement supérieur étant durcissable à une vitesse plus rapide que ledit article non durci.

3. Procédé selon la revendication 1, dans lequel ladite composition de revêtement supérieur est photodurcissable et ledit article non durci est durcissable par la chaleur.

4. Procédé selon la revendication 1, dans lequel ladite composition de revêtement supérieur consiste en un mélange d'une résine de polyester à insaturation éthylénique ou d'ester vinylique, d'un ou de plusieurs composés monomères à insaturation éthylénique copolymérisables et de 0,01 a 5% en poids d'un photoinitiateur.

5. Procédé selon la revendication 1, dans lequel ledit photo-initiateur est choisi dans le groupe constitué par les oxydes d'acylphosphine, les phosphites aliphatiques ou aromatiques et une cétone ou un aldéhyde aromatique qui a une énergie de triplet dans la gamme de 226,09 - 301,45 kJ (54 - 72 kcal)

par mole qui amorce la polymérisation par des photoréactions bimoléculaires du type donneur d'énergie.

**6.** Procédé selon la revendication 1, dans lequel une partie au moins desdites vapeurs de styrène est copolymérisée avec ledit composé oléfinique de ladite composition de revêtement.

**7.** Procédé selon la revendication 1, dans lequel ladite composition de revêtement supérieur donne lieu à une réaction exothermique qui amorce le durcissement par la chaleur dudit article non durci.

## Patentansprüche

**1.** Verfahren zur Ausbildung eines Überzugs auf einem ungehärteten Gegenstand, der einen Radikal-Peroxid-Katalysator enthält und beim Aushärten Styroldampf abgibt, und zum Begrenzen der Emission des genannten Dampfes in die Atmosphäre, welches die Schritte des Tränkens des genannten ungehärteten Gegenstands mit einer Abdecküberzugsmischung, die mindestens eine polymerisierbare olefinische Verbindung und einen Photoinitiator enthält, des Aushärtens der genannten Überzugsmischung unter Ausbildung eines Trennfilms mit einer Dicke von 0,0025 bis 2,5 mm (0,1 bis 100 mils) auf dem genannten ungehärteten Gegenstand, und anschließend des Aushärtens des genannten ungehärteten Gegenstands umfaßt.

**2.** Verfahren nach Anspruch 1, in dem der genannte Abdecküberzug und der genannte Gegenstand gleichzeitig ausgehärtet werden, wobei der genannte Abdecküberzug mit höherer Geschwindigkeit aushärtbar ist als der genannte ungehärtete Gegenstand.

**3.** Verfahren nach Anspruch 1, in dem die genannte Abdecküberzugsmischung photohärtbar und der genannte ungehärtete Gegenstand hitzehärtbar sind.

**4.** Verfahren nach Anspruch 1, in dem die genannte Abdecküberzugsmischung ein Gemisch aus einem ethylenisch ungesättigten Polyester- oder Vinylesterharz, einer oder mehreren ethylenisch ungesättigten copolymerisierbaren monomeren Verbindungen und 0,01 bis 5 Gewichts-% eines Photoinitiators umfaßt.

**5.** Verfahren nach Anspruch 1, in dem der genannte Photoinitiator aus der Gruppe von Acylphosphinoxiden, aliphatischen oder aromatischen Phosphiten und einem aromatischen Keton oder Aldehyd mit einer Triplettenergie im Bereich von 226,09 - 301,45 kJ (54 - 72 Kilokalorien) pro Mol und der Fähigkeit, die Polymerisation über bimolekulare Photoreaktionen vom Energie-Donor-Typ zu fördern, ausgewählt ist.

**6.** Verfahren nach Anspruch 1, in dem mindestens ein Teil des genannten Styroldampfes mit der genannten olefinischen Verbindung der genannten Überzugsmischung copolymerisiert.

**7.** Verfahren nach Anspruch 1, in dem die genannte Abdecküberzugsmischung eine exotherme Reaktion verursacht, welche die Hitzehärtung des genannten ungehärteten Gegenstands einleitet.